# EUROPEAN PATENT APPLICATION

(11) **EP 3 354 941 A1**
(43) Date of publication of application: **01.08.2018**
(21) Application number: 16848538.1
(22) Date of filing: 13.09.2016
(51) Int. Cl.: F16H 61/12, F16H 59/36, F16H 61/662, G05B 23/02

(54) **CONTROL DEVICE FOR CONTINUOUSLY VARIABLE TRANSMISSION AND CONTROL METHOD FOR CONTINUOUSLY VARIABLE TRANSMISSION**

(30) Priority: 25.09.2015 JP 2015187741
(71) Applicant: Nissan Motor Co., Ltd., Yokohama-shi, Kanagawa 221-0023 (JP)
(72) Inventor: KONDO, Haruka, Fuji-shi Shizuoka 417-8585 (JP); ITOU, Youji, Fuji-shi Shizuoka 417-8585 (JP); HAMANO, Masahiro, Fuji-shi Shizuoka 417-8585 (JP); AMANO, Norihira, Fuji-shi Shizuoka 417-0002 (JP)
(74) Representative: Hoefer & Partner Patentanwälte mbB
(86) International application number: PCT/JP2016/076962
(87) International publication number: WO 2017/051750

(57) **Abstract**

A controller is a control device for a transmission, the transmission provided in a vehicle and having a variator and a rotation sensor. The controller decides electrical abnormality of the rotation sensor when an electrical abnormality detection state of the rotation sensor is continued for a set time. The controller also decides functional abnormality of the rotation sensor when rotation speed is included in an abnormality detection region of the functional abnormality, and inhibits a decision on the functional abnormality during counting of the set time.

## Description

### TECHNICAL FIELD

The present invention relates to a control device for a continuously variable transmission and a control method for a continuously variable transmission.

### BACKGROUND ART

JP1-269012A, JP4-307374A, and JP2000-132226A disclose techniques of detecting disconnection of a rotation speed sensor.

### SUMMARY OF INVENTION

Abnormality of the rotation speed sensor includes electrical abnormality and functional abnormality. The electrical abnormality includes, for example, disconnection, and in addition, a power supply fault in which a short circuit occurs with a power supply, and an earth fault in which a short circuit occurs with the ground. The functional abnormality includes, for example, an offset shift of an output value, and a radical change to an intermediate value or fixation of the output value. The functional abnormality is generated by, for example, disturbance of a magnetic field detected by the rotation speed sensor due to an external factor.

An abnormality detection region of the electrical abnormality and an abnormality detection region of the functional abnormality may sometimes overlap with each other. Within a region where the abnormality detection regions overlap with each other, an abnormality cause cannot be decided to be the electrical abnormality or the functional abnormality. Therefore, a technique capable of identifying the abnormality cause of the rotation speed sensor is desired.

The present invention is achieved in consideration of such a technical problem, and an object thereof is to provide a control device for a continuously variable transmission and a control method for a continuously variable transmission capable of identifying an abnormality cause of a rotation speed sensor.

A control device for a continuously variable transmission according to a certain aspect of the present invention includes a first determination unit and a second determination unit. The continuously variable transmission is provided in a vehicle and includes a variator and a rotation speed sensor adapted to detect rotation speed on the input side or the output side of the variator. The first determination unit is adapted to decide electrical abnormality of the rotation speed sensor when an electrical abnormality detection state of the rotation speed sensor is continued for a set time. The second determination unit is adapted to decide functional abnormality of the rotation speed sensor when an output value of the rotation speed sensor is included in an abnormality detection region, and inhibit a decision on the functional abnormality during counting of the set time.

According to another aspect of the present invention, a control method for a continuously variable transmission is provided. The continuously variable transmission is provided in a vehicle and includes a variator and a rotation speed sensor adapted to detect rotation speed on the input side or the output side of the variator. The control method includes deciding electrical abnormality of the rotation speed sensor when an electrical abnormality detection state of the rotation speed sensor is continued for a set time. The control method also includes deciding functional abnormality of the rotation speed sensor when an output value of the rotation speed sensor is included in an abnormality detection region, and inhibiting a decision on the functional abnormality during counting of the set time.

According to these aspects, when an electrical abnormality decision condition is satisfied, that is, when the electrical abnormality detection state is continued for the set time, the abnormality cause can be decided to be the electrical abnormality in advance. Therefore, when the abnormality cause is decided to be not the electrical abnormality in advance, the abnormality cause can be decided to be the functional abnormality upon the output value of the rotation speed sensor being included in the abnormality detection region. Therefore, according to theses aspects, the abnormality cause of the rotation speed sensor can be identified.

### BRIEF DESCRIPTION OF DRAWINGS

[Fig. 1] Fig. 1 is a diagram showing major portions of a vehicle including a transmission.
[Fig. 2] Fig. 2 is a graph showing a first example of abnormality detection regions.
[Fig. 3] Fig. 3 is a graph showing a second example of the abnormality detection regions.
[Fig. 4] Fig. 4 is a flowchart showing one example of control of an embodiment.

### DESCRIPTION OF EMBODIMENTS

Hereinafter, an embodiment of the present invention will be described with reference to the attached drawings. A speed ratio is a value obtained by dividing input rotation speed by output rotation speed.

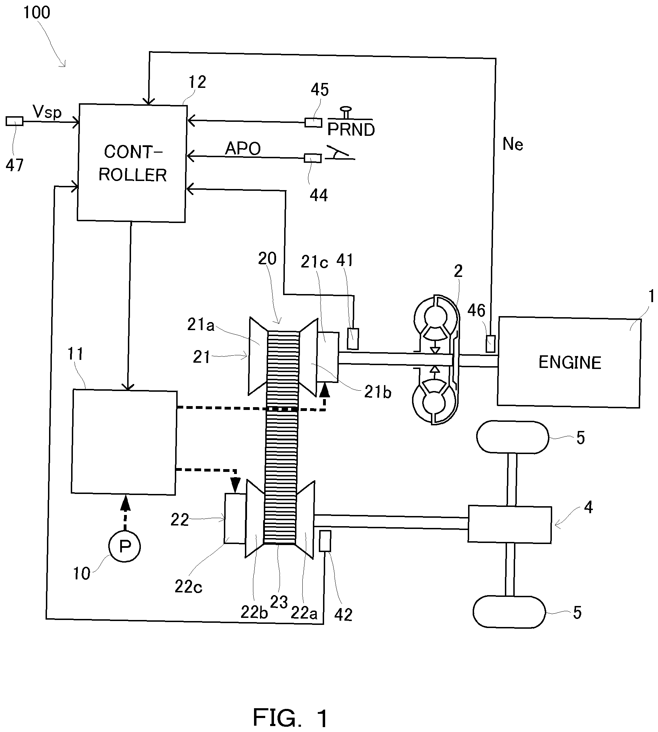

Fig. 1 is a diagram showing major portions of a vehicle including a transmission 100. The vehicle includes an engine 1, a torque converter 2, a variator 20, an axle portion 4, and drive wheels 5.

The engine 1 forms a power source of the vehicle. The torque converter 2 transmits power via a fluid. The variator 20 outputs inputted rotation speed as rotation speed in accordance with the speed ratio. The axle portion 4 is formed to have a reduction gear, a differential device, or a drive axle. The power of the engine 1 is transmitted to the drive wheels 5 via the torque converter 2, the variator 20, and the axle portion 4.

The variator 20 is a continuously variable transmission mechanism including a primary pulley 21, a secondary pulley 22, and a belt 23. Hereinafter, the term "primary" will be abbreviated as PRI, and the term "secondary" will be abbreviated as SEC.

The PRI pulley 21 has a fixed pulley 21a, a movable pulley 21b, and a PRI chamber 21c. In the PRI pulley 21, PRI pressure is supplied to the PRI chamber 21c.

The SEC pulley 22 has a fixed pulley 22a, a movable pulley 22b, and a SEC chamber 22c. In the SEC pulley 22, SEC pressure is supplied to the SEC chamber 22c.

The belt 23 is looped over a V-shaped sheave surface formed by the fixed pulley 21a and the movable pulley 21b of the PRI pulley 21, and a V-shaped sheave surface formed by the fixed pulley 22a and the movable pulley 22b of the SEC pulley 22.

The variator 20 forms a belt continuously variable transmission mechanism adapted to change a looping diameter of the belt 23 to perform shift by respectively changing groove width of the PRI pulley 21 and groove width of the SEC pulley 22.

In such a variator 20, by controlling the PRI pressure, the movable pulley 21b is activated and the groove width of the PRI pulley 21 is changed. By controlling the SEC pressure, the movable pulley 22b is activated, and the groove width of the SEC pulley 22 is changed.

The PRI pressure and the SEC pressure are generated in a hydraulic control circuit 11 with line pressure PL as source pressure. The line pressure PL may be applied to one of the PRI pressure and the SEC pressure. In this case, the variator 20 can be formed as a variator for the single pressure regulation method.

The vehicle further includes an oil pump 10, the hydraulic control circuit 11, and a controller 12.

The oil pump 10 pressure-feeds oil. A mechanical oil pump to be driven by the power of the engine 1 can be used as the oil pump 10.

The hydraulic control circuit 11 adjusts pressure of the oil pressure-fed from the oil pump 10, that is, hydraulic pressure and transmits to portions of the variator 20. In the hydraulic control circuit 11, the line pressure PL, the PRI pressure, and the SEC pressure are adjusted.

The controller 12 is an electronic control device and controls the hydraulic control circuit 11. Output signals of a rotation sensor 41 and a rotation sensor 42 are inputted to the controller 12.

The rotation sensor 41 is a variator input side rotation sensor for detecting rotation speed on the input side of the variator 20. The rotation sensor 42 is a variator output side rotation sensor for detecting rotation speed on the output side of the variator 20.

Specifically, the rotation speed on the input side of the variator 20 is rotation speed of an input shaft of the variator 20. The rotation speed on the input side of the variator 20 may be rotation speed at a position of the power transmission path to sandwich, for example, a gear train with the variator 20. The same is applied to the rotation speed on the output side of the variator 20.

In addition, output signals of an accelerator position sensor 44, an inhibitor switch 45, an engine rotation sensor 46, a vehicle speed sensor 47 and the like are inputted to the controller 12.

The accelerator position sensor 44 detects an accelerator position APO representing an operation amount of an accelerator pedal. The inhibitor switch 45 detects a position of a selector lever. The engine rotation sensor 46 detects rotation speed Ne of the engine 1. The vehicle speed sensor 47 detects vehicle speed Vsp.

The controller 12 generates a shift control signal on the basis of these signals and outputs the generated shift control signal to the hydraulic control circuit 11. The hydraulic control circuit 11 controls the line pressure, the PRI pressure, and the SEC pressure or switches a hydraulic path on the basis of the shift control signal from the controller 12.

Thereby, the hydraulic pressure is transmitted from the hydraulic control circuit 11 to the portions of the variator 20 in accordance with the shift control signal. As a result, the speed ratio of the variator 20 is changed to be a speed ratio in accordance with the shift control signal, that is, a target speed ratio.

Specifically, in speed ratio control of the variator 20, at least rotation speed information obtained from the rotation sensor 41, rotation speed information obtained from the rotation sensor 42, and vehicle speed information are used. The rotation speed information obtained from the rotation sensor 41 is a current output value of the rotation sensor 41 at the time when the rotation sensor 41 is normal. The same is applied to the rotation speed information obtained from the rotation sensor 42. In the present embodiment, the vehicle speed information is an output value of the vehicle sensor 47 which is a sensor different from the rotation sensor 41 and the rotation sensor 42, specifically, the vehicle speed Vsp.

The output value of the rotation sensor 41 is a value detected on the basis of an output of the rotation sensor 41 irrespective of normality of the rotation sensor 41. Specifically, the output value of the rotation sensor 41 is rotation speed Nrpi' which is rotation speed of the PRI pulley 21 detected on the basis of the output of the rotation sensor 41. The rotation speed Nrpi' becomes rotation speed Npri which is actual rotation speed of the PRI pulley 21 at the time when the rotation sensor 41 is normal.

The same is applied to an output value of the rotation sensor 42. Therefore, specifically, the output value of the rotation sensor 42 is rotation speed Nsec' which is rotation speed of the SEC pulley 22 detected on the basis of an output of the rotation sensor 42. The rotation speed Nsec' becomes rotation speed Nsec which is actual rotation speed of the SEC pulley 22 at the time when the rotation sensor 42 is normal.

The transmission 100 is a continuously variable transmission formed to have the variator 20, and in addition, the hydraulic control circuit 11 and the controller 12 that control the speed ratio in such a way, the rotation sensor 41, and the rotation sensor 42.

Abnormality of the rotation sensor 41 and the rotation sensor 42 includes electrical abnormality and functional abnormality. Abnormality detection regions of the abnormality are set as follows, for example.

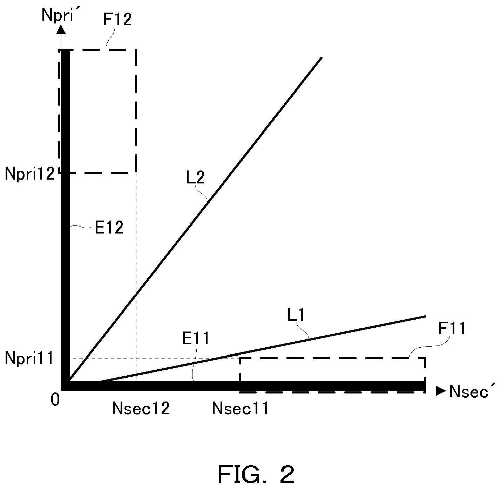

Fig. 2 is a graph showing a first example of the abnormality detection regions. Fig. 2 shows an abnormality detection region E11 and an abnormality detection region E12 for disconnection abnormality, and an abnormality detection region F11 and an abnormality detection region F12 for mismatching abnormality. The disconnection abnormality is one example of the electrical abnormality. The mismatching abnormality is abnormality in which the output value is mismatched with a normal value, serving as one example of the functional abnormality.

Fig. 2 shows a straight line L1 and a straight line L2 together. The straight line L1 indicates the highest line with which the speed ratio of the variator 20 is the smallest. The straight line L2 indicates the lowest line with which the speed ratio of the variator 20 is the greatest.

In a case where the rotation sensor 41 and the rotation sensor 42 are normal, operating points indicated by the rotation speed Npri' and the rotation speed Nsec' are included in a region between the straight line L1 and the straight line L2.

The abnormality detection region E11 is a region corresponding to the disconnection abnormality of the rotation sensor 41. Therefore, the abnormality detection region E11 is set as a region where the rotation speed Npri' is zero irrespective of the rotation speed Nsec'.

The abnormality detection region E12 is a region corresponding to the disconnection abnormality of the rotation sensor 42. Therefore, the abnormality detection region E12 is set as a region where the rotation speed Nsec' is zero irrespective of the rotation speed Npri'.

The abnormality detection region F11 is a region corresponding to the mismatching abnormality of the rotation sensor 41. Therefore, the abnormality detection region F11 is set as a region on the opposite side of the straight line L2 with respect to the straight line L1. Specifically, the abnormality detection region F11 is set as a region where although the rotation speed Nsec' is higher than a predetermined value Nsec11, the rotation speed Npri' is lower than a predetermined value Npri11.

The abnormality detection region F12 is a region corresponding to the mismatching abnormality of the rotation sensor 42. Therefore, the abnormality detection region F12 is set as a region on the opposite side of the straight line L1 with respect to the straight line L2. Specifically, the abnormality detection region F12 is set as a region where although the rotation speed Npri' is higher than a predetermined value Npri12, the rotation speed Nsec' is lower than a predetermined value Nsec12.

In this example, a portion of the abnormality detection region E11 where the rotation speed Nsec' is higher than the predetermined value Nsec11, and the abnormality detection region F11 form an overlapping region. Therefore, in a case where the operating points are included in this overlapping region, an abnormality cause cannot be identified to be the disconnection abnormality or the mismatching abnormality. The same is applied to the abnormality detection region E12 and the abnormality detection region F12.

A situation where the abnormality cause cannot be identified to be the disconnection abnormality or the mismatching abnormality is generated in the following case, for example.

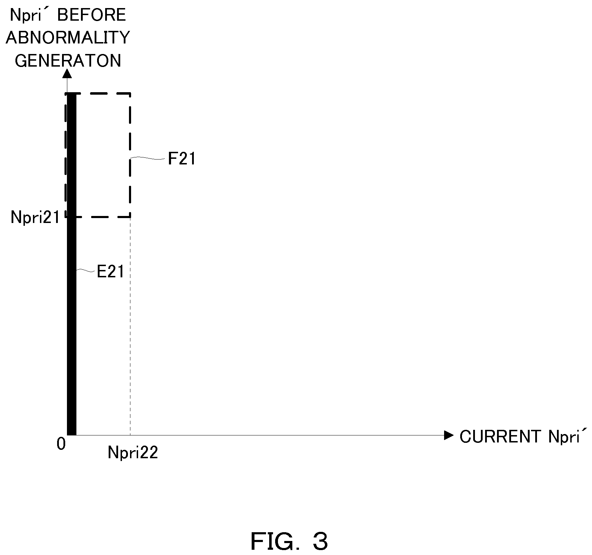

Fig. 3 is a graph showing a second example of the abnormality detection regions. Fig. 3 shows an abnormality detection region E21 for the disconnection abnormality, and an abnormality detection region F21 for radical drop abnormality. The radical drop abnormality is abnormality in which the output value is radically lowered, serving as the functional abnormality. Fig. 3 shows a case where the rotation sensor 41 is targeted as an example. Similar settings can also be done for a case where the rotation sensor 42 is targeted.

In Fig. 3, the vertical axis indicates rotation speed Npri' before abnormality generation, and the horizontal axis indicates current rotation speed Npri'. The rotation speed Npri' before abnormality generation is rotation speed Npri' obtained immediately before obtaining the current rotation speed Npri'.

The abnormality detection region E21 is a region corresponding to the disconnection abnormality of the rotation sensor 41. Therefore, the abnormality detection region E21 is set as a region where the current rotation speed Npri' is zero irrespective of the rotation speed Npri' before abnormality generation.

The abnormality detection region F21 is a region corresponding to the radical drop of the rotation sensor 41. Therefore, the abnormality detection region F21 is set as a region where the rotation speed Npri' before abnormality generation is higher than a predetermined value Npri21, and the current rotation speed Npri' is lower than a predetermined value Npri22. The predetermined value Npri22 can be about one fifth of the predetermined value Npri21.

In this example, a portion of the abnormality detection region E21 where the rotation speed Npri' before abnormality generation is higher than the predetermined value Npri21, and the abnormality detection region F21 form an overlapping region. Therefore, in a case where the operating points are included in this overlapping region, the abnormality cause cannot be identified to be the disconnection abnormality or the mismatching abnormality.

In consideration with these situations, the controller 12 performs the following control in the present embodiment.

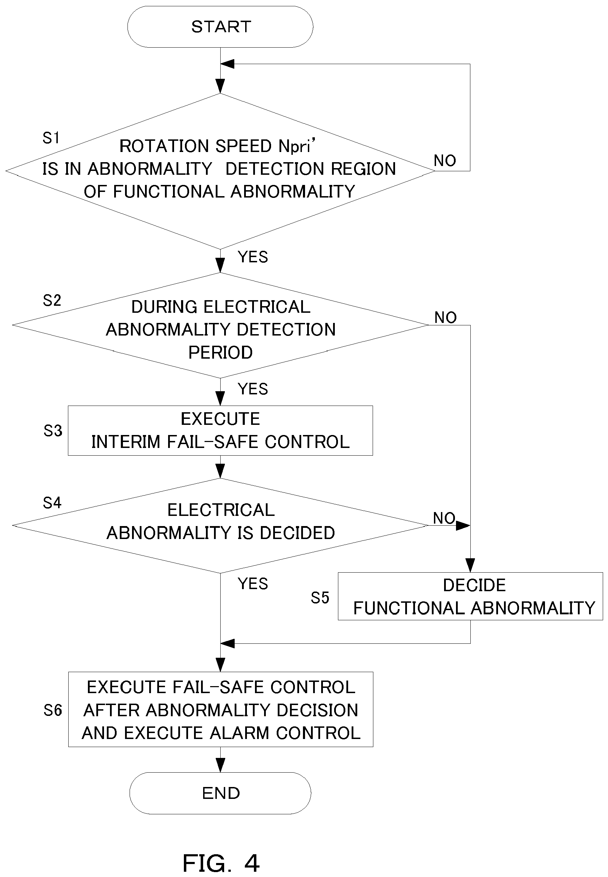

Fig. 4 is a flowchart showing one example of the control performed by the controller 12. Fig. 4 shows a case where the rotation sensor 41 is targeted as an example. Similar control can also be performed when the rotation sensor 42 is targeted.

In Step S1, the controller 12 determines whether or not the rotation speed Npri', in other words, the output value of the rotation sensor 41 is included in the abnormality detection region of the functional abnormality. Whether the rotation speed Npri' is included in the abnormality detection region of the functional abnormality is determined on the basis of a parameter regulating the abnormality detection region of the functional abnormality, the parameter including at least the rotation speed Npri'.

Specifically, in a case where the abnormality detection region of the functional abnormality is the abnormality detection region F11, a determination is done on the basis of the rotation speed Npri' and the rotation speed Nsec' in Step S1. In a case where the abnormality detection region of the functional abnormality is the abnormality detection region F21, a determination is done on the basis of the rotation speed Npri' in Step S1. When a negative determination is provided in Step S 1, the process of Step S 1 is performed again. When a positive determination is provided in Step S1, the process is forwarded to Step S2.

In Step S2, the controller 12 determines whether or not it is during an electrical abnormality detection period. The electrical abnormality detection period is a set time set as a time period from when the electrical abnormality is detected to when the electrical abnormality is decided. The electrical abnormality detection period is provided when the electrical abnormality is detected. Detection of the electrical abnormality can be performed by determining whether or not the rotation speed Npri' is included in the abnormality detection region E11 or the abnormality detection region E21.

The detection of the electrical abnormality is performed regularly and separately from the process of the present flowchart. The detection of the electrical abnormality can be performed by a different controller other than the controller 12. In this case, for example, the controller 12 may start counting of the set time when receiving a detection flag of the electrical abnormality from the different controller. Thereby, by determining whether or not it is during the counting of the set time, whether or not it is during the electrical abnormality detection period can be determined.

The counting of the set time may be performed by the different controller. In this case, by determining whether or not a state flag indicating that it is during the counting of the set time is received from the different controller, the controller 12 can determined whether or not it is during the electrical abnormality detection period.

In a case where a positive determination is provided in Step S2, the rotation speed Npri' is included in the abnormality detection region of the functional abnormality during the counting of the set time. In this case, the controller 12 performs interim fail-safe control as shown in Step S3.

That is, as described above, the controller 12 controls the speed ratio of the variator 20 by using the rotation speed Npri' and the rotation speed Nsec' serving as the rotation speed information, or the vehicle speed Vsp at the normal time. Meanwhile, in a case where a positive determination is provided in Step S2, the controller 12 performs the interim fail-safe control.

In the interim fail-safe control, the speed ratio of the variator 20 is controlled by using the rotation speed Npri' immediately before the rotation speed being included in the abnormality detection region of the functional abnormality as the rotation speed information. Specifically, the immediately-before rotation speed Npri' is used as the rotation speed information obtained from the rotation sensor 41 instead of false rotation speed Npri' detected on the basis of the output of the failed rotation sensor 41. The immediately-before rotation speed Npri' is used because the rotation speed Npri which is actual rotation speed of the PRI pulley 21 is not greatly changed for a short time.

In the interim fail-safe control, except the above point, the speed ratio of the variator 20 can be controlled as well as the normal time. In a case of this example, the speed ratio of the variator 20 can also be controlled by using, for example, the output value of the rotation sensor 42 serving as a different sensor from the rotation sensor 41 targeted as the vehicle speed information instead of the vehicle speed Vsp obtained from the vehicle speed sensor 47.

In Step S4, the controller 12 determines whether or not the electrical abnormality is decided. Whether or not the electrical abnormality is decided is determined by whether or not an electrical abnormality detection state, that is, a state where the rotation speed Npri' is included in the abnormality detection region E11 or the abnormality detection region E21 is continued for the set time.

Whether or not the electrical abnormality detection state is continued for the set time can be determined by, for example, whether or not the detection flag of the electrical abnormality is continuously received from the above different controller during the counting of the set time.

Whether or not the electrical abnormality detection state is continued for the set time can be determined by, for example, the above different controller. In this case, the controller 12 may receive a determination flag indicating whether or not the electrical abnormality detection state is continued for the set time from the different controller. Thereby, on the basis of the received determination flag, whether or not the electrical abnormality detection state is continued for the set time can be determined. Including such a case, by determining that the electrical abnormality is decided in Step S4, the electrical abnormality is decided.

A decision on the electrical abnormality in the controller 12 may be performed by further turning a decision flag of the electrical abnormality ON subsequent to a positive determination of Step S4. A determination of Step S4 is performed after the end of the electrical abnormality detection period, in other words, the completion of the counting of the set time. When a positive determination is provided in Step S4, the process is forwarded to Step S6.

In Step S6, the controller 12 performs the fail-safe control after abnormality decision. The controller 12 controls the speed ratio of the variator 20 by not using the rotation speed information but using at least the vehicle speed Vsp as the fail-safe control after abnormality decision. In the fail-safe control after abnormality decision, the speed ratio of the variator 20 is controlled by open-loop control on the basis of the vehicle speed Vsp. Therefore, not only the rotation speed Npri' but also the rotation speed Nsec' are used as the rotation speed information.

In Step S6, the controller 12 also performs alarm control by lighting of an alarming light, etc. Thereby, abnormality is notified upon the decision of the abnormality without notifying of the abnormality at the stage of abnormality detection.

When a negative determination is provided in Step S2, the rotation speed Npri' is included in the abnormality detection region of the functional abnormality but the electrical abnormality is not detected. When a negative determination is provided in Step S4, the rotation speed Npri' is included in the abnormality detection region of the functional abnormality, and the electrical abnormality is detected but the electrical abnormality is not yet decided. That is, a negative determination is provided in Step S4, it is decided that the abnormality cause is not the electrical abnormality.

Therefore, a negative determination is provided in Step S2 or Step S4, the process is forwarded to Step S5, and the controller 12 decides the functional abnormality. A decision of the functional abnormality can be performed by, for example, turning a decision flag of the functional abnormality ON. It can also be understood that the functional abnormality is decided upon a negative determination in Step S2 or Step S4.

In a case where the functional abnormality is decided in such a way, and when a positive determination is provided in Step S2 and Step S4, the process cannot be forwarded to Step S5. Thereby, a decision on the functional abnormality during the counting of the set time is inhibited.

After Step S5, the process is forwarded to Step S6. Therefore, the fail-safe control after abnormality decision and the alarm control are performed not only after the decision of the electrical abnormality but also after the decision of the functional abnormality. After Step S6, the present flowchart is ended.

In the present embodiment, the controller 12 forms the control device for the transmission 100, that is, a control device for a continuously variable transmission. The controller 12 functions as a first determination unit by performing the process of Step S4 and also providing a positive determination in Step S4. The controller 12 functions as a second determination unit by performing the process of Step S5 after a positive determination of Step S1, and by not performing the process of Step S5 in a case where a positive determination is provided in Step S2 and Step S4, in other words, by performing the process of Step S5 after a negative determination of Step S2 or Step S4.

The controller 12 further functions as a speed ratio control unit adapted to control the speed ratio of the variator 20. The controller 12 serving as the speed ratio control unit performs the interim fail-safe control by performing the process of Step S3 after a positive determination of Step S 1 and Step S2. The controller 12 serving as the speed ratio control unit also performs the fail-safe control after abnormality decision by performing the process of Step S6 after a positive determination of Step S4 or Step S5.

By functioning as these functional portions, the controller 12 has these functional portions. It can also be understood that the control device for the transmission 100 is realized by the hydraulic control circuit 11 and the controller 12.

Next, major operations and effects of the controller 12 will be described. Hereinafter, a case where the rotation sensor 41 is targeted will be described. However, the same is applied to a case where the rotation sensor 42 is targeted.

The controller 12 is the control device for the transmission 100, the transmission provided in the vehicle and having the variator 20 and the rotation sensor 41. The controller 12 decides the electrical abnormality of the rotation sensor 41 when the electrical abnormality detection state is continued for the set time. When the rotation speed Npri' is included in the abnormality detection region of the functional abnormality, the controller 12 decides the functional abnormality of the rotation sensor 41 and inhibits the decision of the functional abnormality during the counting of the set time.

With the controller 12 formed in such a way, when an electrical abnormality decision condition is satisfied, that is, when the electrical abnormality detection state is continued for the set time, the abnormality cause can be decided to be the electrical abnormality in advance. Therefore, when the abnormality cause is decided to be not the electrical abnormality in advance, the abnormality cause can be decided to be the functional abnormality upon the rotation speed Npri' being included in the abnormality detection region of the functional abnormality. Therefore, with the controller 12 formed in such a way, the abnormality cause of the rotation sensor 41 can be identified.

With the controller 12 formed in such a way, the following operations and effects can also be obtained. In the vehicle, in a case where an error code is recorded for every abnormality cause and two or more error codes are recorded, that is, at the time of multiple failure, the transmission 100 may sometimes be forcibly brought into a neutral state and fail-safe control for the time of multiple failure to make the vehicle incapable of running may sometimes be performed.

In such a case, with the controller 12 formed as above, in the overlapping region of the abnormality detection region of the electrical abnormality and the abnormality detection region of the functional abnormality, the abnormality cause is not recognized as both the electrical abnormality and the functional abnormality. Therefore, the fail-safe control for the time of multiple failure can also be prevented from being performed due to false recognition of the abnormality cause.

The controller 12 further controls the speed ratio of the variator 20 by using at least the rotation speed information by the rotation speed Npri' at the normal time and the vehicle speed Vsp. The controller 12 adapted to control the speed ratio of the variator 20 in such a way performs the interim fail-safe control when the rotation speed Npri' is included in the abnormality detection region of the functional abnormality during the counting of the set time..

With the controller 12 formed in such a way, even in a case where the rotation speed Npri' comes into the abnormality detection region of the functional abnormality during the electrical abnormality detection period, a radical change of the speed ratio of the variator 20 due to use of the false rotation speed Npri' can be prevented.

For controlling the speed ratio of the variator 20, the controller 12 performs the fail-safe control after abnormality decision after the decision of the electrical abnormality or the functional abnormality.

With the controller 12 formed in such a way, even in a case where the electrical abnormality or the functional abnormality is generated, the speed ratio of the variator 20 can be controlled on the basis of precise information.

The embodiment of the present invention is described above. However, the above embodiment does not intend to limit the technical scope of the present invention to the specific configurations of the above embodiment but only indicates part of application examples of the present invention.

In the above embodiment, the case where the variator 20 is a belt continuously variable transmission mechanism is described. However, the variator 20 may be, for example, a toroidal continuously variable transmission mechanism.

In the above embodiment, the case where the rotation sensor 41 or the rotation sensor 42 is targeted is described. However, the condition that the rotation sensor 41 or the rotation sensor 42 is targeted includes a state where any one of the rotation sensors is focused on in a case where the control in which the rotation sensor 41 is targeted is performed and the control in which the rotation sensor 42 is targeted is performed together.

In the above embodiment, the case where the controller 12 is formed as the functional portions is described. However, the functional portions may be formed by plural controllers.

The present application claims a priority based on Japanese Patent Application No. 2015-187741 filed with the Japan Patent Office on September 25, 2015, all the contents of which are hereby incorporated by reference.

## Claims

1. A control device for a continuously variable transmission, the continuously variable transmission provided in a vehicle and including a variator and a rotation speed sensor adapted to detect rotation speed on the input side or the output side of the variator, the control device comprising:
a first determination unit adapted to decide electrical abnormality of the rotation speed sensor when an electrical abnormality detection state of the rotation speed sensor is continued for a set time; and
a second determination unit adapted to decide functional abnormality of the rotation speed sensor when an output value of the rotation speed sensor is included in an abnormality detection region, and inhibit a decision on the functional abnormality during counting of the set time.

2. The control device for the continuously variable transmission according to claim 1, further comprising:
a speed ratio control unit adapted to control a speed ratio of the variator by using at least rotation speed information obtained from the rotation speed sensor, and vehicle speed information, wherein
the speed ratio control unit controls the speed ratio of the variator by using an output value of the rotation speed sensor immediately before the output value being included in the abnormality detection region as the rotation speed information when the output value of the rotation speed sensor is included in the abnormality detection region during the counting of the set time.

3. The control device for the continuously variable transmission according to claim 2, wherein
the speed ratio control unit controls the speed ratio of the variator by not using the rotation speed information but using at least the vehicle speed information after a decision on the electrical abnormality or the functional abnormality.

4. A control method for a continuously variable transmission, the continuously variable transmission provided in a vehicle and including a variator and a rotation speed sensor adapted to detect rotation speed on the input side or the output side of the variator, the control method comprising:
deciding electrical abnormality of the rotation speed sensor when an electrical abnormality detection state of the rotation speed sensor is continued for a set time; and
deciding functional abnormality of the rotation speed sensor when an output value of the rotation speed sensor is included in an abnormality detection region, and inhibiting a decision on the functional abnormality during counting of the set time.
